Europäisches Patentamt

European Patent Office

Office européen des brevets

(11) Publication number: **0 446 786 A1**

# EUROPEAN PATENT APPLICATION

(21) Application number: **91103499.9**

(22) Date of filing: **07.03.91**

(51) Int. Cl.⁵: **G09B 9/08**, G05D 3/14, F15B 9/03

(30) Priority: **14.03.90 US 493291**

(43) Date of publication of application:
**18.09.91 Bulletin 91/38**

(84) Designated Contracting States:
**DE ES FR GB IT**

(71) Applicant: **Fokker Aircraft B.V.**
**Schipholdijk 231**
**NL-1117 AB Schiphol(NL)**

(72) Inventor: **Hordijk, Jan**

Blankenstraat 69
NL-2132 RT Hoofddorp(NL)
Inventor: **Wierda, Gerhard Johan**
Muntstraat 135
NL-2165 VH Lisserbroek(NL)

(74) Representative: **Schumann, Bernard Herman**
**Johan et al**
**OCTROOIBUREAU ARNOLD & SIEDSMA**
**Sweelinckplein 1**
**NL-2517 GK The Hague(NL)**

(54) **Movement-simulator.**

(57) A movement simulator comprises a motion system for moving the dummy flight deck of a ground-based flight simulator incorporating an electrohydraulic control system to control the various hydraulic jacks of the platform in response to the flight controls.

To enable a high degree of naturalness of the simulation, the control loop of the hydraulic cylinder movement derives the feedback signal from an acceleration transducer assembly comprising two identically positioned transducers aligned at the same axis. The output signals of said two transducers are subtracted to thereby form an acceleration signal where the gravity component is eliminated from the measured acceleration.

FIG.5

The invention relates to a movement-simulator, comprising:

a frame to be immovably positioned, e.g. to be placed on the floor;

a subframe movable relative to said frame, e.g. for carrying a control unit and a seat for a user;

at least one variable element having a controllable length, such as a hydraulic cylinder, said element being coupled with said frame and carrying said subframe;

a central control assembly connected with the or each variable element for controlling the length thereof; and

a transducer assembly for at least one parameter representative for the mechanical condition of said variable element, said transducer assembly supplying its output signal representative for the actual value of the related parameter to the central control assembly for comparison thereof with the instantaneous nominal value of the related parameter and adjusting the variable element until the actual value and the nominal value of the parameter substantially equal each other.

Such a movement-simulator is e.g. known from applicants' European patent application EP-B-0 051 896. This patent application discloses a flight simulator by means of which a user during a simulated flight is very realistically subjected to the force play also occurring during real flight circumstances. The movement-simulator according to the invention is not limited to flight simulators, but rather encompasses also other applications, in which one desires to be in a position to control force, acceleration, velocity and/or position to a movable subframe with high accuracy. E.g. a movement-simulator can also simulate the movements of tanks, trucks, ships or the like.

The mentioned European patent application EP-B-0 051 896 which is hereby disclosed by way of reference, relates to a flight simulator in which use is made of a force transducer and a position transducer. These transducers supply signals which are representative for the experienced force and the actual position, respectively, of the element, the position of which is variable. A computer calculates the nominal values of the related parameters, compares them with the measures, actual values and controls by means of a control assembly a hydraulic cylinder, until the parameters in question have the desired values, in other words, until the differences between the measured values and the actual values are substantially zero.

In the prior art flight simulator the force signal forms the basis. In order to control the control valve of the hydraulic cylinder with a signal proportional with the velocity, the force signal is subjected to a (variable) amplification or attenuation and subsequently intregrated. The amplification factor therefore has the dimension of a mass. Dividing by the value of said mass, however, has two basic disadvantages. The related mass may never become a value approximating zero, since otherwise the gain in the related loop might become too large, as a result of which the system can no longer follow the nominal accelerations or there is a risk that the system is overloaded. Furthermore, the position in space of the hydraulic cylinders is during use of the apparatus strongly variable, as a result of which also the effective mass experienced thereby of the subframe can strongly vary. Thus, it is not realistic to give a divider according to the prior art a fixed adjustment. This adjustment would in any case has to be variable, so that the effective mass is always approximated as good as possible. In practice, however, this appears not to be realizable within the required, very high accuracy.

The accuracy, with which the system is able to perform the desired movements, has to be determined in view of the sensing threshold of the most experienced users. It appears that trained users are the most sensitive for sensing, "feeling", accelerations.

It is a purpose of the invention to modify the existing movement-simulator such that it is able to realize such a high degree of naturalness of the simulation, that even the most trained users experience the simulation as fully natural. In order to realize this purpose the movement-simulator according to the invention is characterized in that the transducer assembly comprises an acceleration transducer supplying an acceleration signal representative for the acceleration of the end of the variable element connected with said subframe.

In a movement-simulator of this type, in which the or each variable element can take a variable position in space dependent upon the actual mechanical condition, the problem arises that the acceleration transducer also measures the acceleration of gravity and is sensitive to spurious signals. These can e.g. be caused by disturbances from the "cockpit". In order to remove this disadvantage this movement-simulator can advantageously be characterized in that the acceleration transducer comprises two transducers, the first of which is arranged at the end of the variable element connected with said subframe and the second is arranged in the same position in space as, and particularly aligned with said first transducer and is arranged at the end of the variable element connected with said frame, the output signals of said two transducers being subtracted from each other for forming the acceleration signal. As a result of the difference-arrangement the gravity component is eliminated from the measured acceleration, whilst furthermore the mentioned disturbances can substantially be eliminated.

It should be noted that the spacial position of both acceleration transducers have to be identical with a high accuracy. Therefore it will be generally necessary to align the two transducers.

Relative to the construction of acceleration transducers it should be noted that these are per se knwon transducers comprising a force transdurcer loaded with a fixed mass movable in one single direction. Such acceleration transducers are used as vibration sensors for measuring vibrations of constructions, such as walls, machine parts and the like. An acceleration transducer can supply an acceleration signal which is frequency-independent up to a previously chosen frequency, e.g. 50 Hz. The dimensioning of acceleration transducers is known in the related field of techniek and is beyond the frame of the present invention.

In order that the two transducers supply in a degree as high as possible identical signals that embodiment is preferred, of which the two transducers are arranged in substantially the same place.

Generally this will not be readily realizable.

In practice, therefore, often that embodiment will be preferred, in which the two transducers are placed on different positions and that the central control assembly calculates the acceleration signal on basis of the measured or calculated mechanical condition, e.g. the position in space, of the variable element. The arms relative to the hinging point of the variable element with the frame are in this configuration different. As a result of this the centrifugal acceleration experienced by both transducers differs. With reference to the measured or calculated position of the variable element with this embodiment a correction takes place, as a result of which the acceleration signal can be determined with efficient accuracy.

As has been discussed already in applicants' previous European patent application EP-B-0 051 896 it may make sense to also use a velocity signal and a position signal as a control signal for the variable element.

In view thereof a further embodiment is characterized by a first integrator, the input of which receives the acceleration signal and the output of which supplies a velocity signal serving as a control signal for the variable element.

Another embodiment is characterized by a second integrator, the input of which receives the velocity signal and the output of which supplies a position signal serving as a control signal for the variable element.

Under circumstances it may be desired to "stiffen" the hydraulic oil of the hydraulic cylinder, causing the Eigen-frequency of the variable element to be increased. In this connection it should be noted that as a result of the mass varying during the use of the apparatus the Eigen-frequency varies. Therefore a certain amount of force-feedback should be used, as was also the case in the system known from EP-B-0 051 896. In order to make this force-signal available the measured acceleration is multiplied with the effective mass calculated by the computer. The force-feedback according to the invention only serves as a correction or compensation term, whilst the acceleration signal forms the principle control basis. The acceleration is measured and multiplied with a calculated or measured mass in order to obtain the force. This calculation is performed by a computer, to which information regarding the mechanical condition of the subframe and/or the variable element is supplied. This corrected control appears to be able to very possitively influence the simulation.

Preferably use is made of a summing circuit subjecting the acceleration signal, the velocity signal, the position signal each individually to a previously chosen or adjustable amplification or attenuation and subsequently sums those signals, the output signal of said summing circuit serving as a control signal for the variable element. With the aid thereof by means of a well-chosen relative adjustment the best simulation can be obtained.

As described, the optimum performance is obtained with an arrangement of two transducers arranged on the variable element, particularly a hydraulic cylinder.

Such arrangement has the inherent disadvantage that it requires a very accurate alignment of the two transducers. Such alignment has to be performed for every individual movement-simulator and for every cylinder individually. Furthermore, acceleration transducers are expensive devices.

Therefore, the invention provides a movement-simulator of the type described, in which the variable element is a hydraulic or pneumatic cylinder in which a piston is slidably arranged separating the cylinder in two compartments. This embodiment is characterized in that the acceleration transducer comprises two pressure transducers generating pressure signals representative of the pressures prevailing in the two respective compartments; multiplying means multiplying said pressure signals with the respective effective piston areas for generating respective force signals; subtracting means subtracting said force signals for generating an effective force signal; and dividing means dividing said effective force signal by the effective mass present at the end of the cylinder carrying said subframe, for generating an effective acceleration signal which signal is the output signal of the acceleration transducer.

For this embodiment the designer can advantageously choose a cylinder that is already provided with the pressure transducers. Such cylinders are known per se and readily commercially available.

It should be noted that the effective mass at the free end of the cylinder carrying the subframe is actually varying with the actual mechanical condition of the subframe. Specifically in the case of a subframe having a larger number of degrees of freedom, particularly three translation degrees of freedom and three rotation degrees of freedom, the mass (including the rotational inertion moment) can appreciably vary. For an optimum performance giving a high-quality simulation of the actual movements sensed by the trainee, a more sophisticated embodiment can be preferred, which is characterized in that the effective mass is calculated by a computer previously fed with relevant parameters, such as mass (distribution) of the subframe, (rest) length of the cylinder, (rest) angle between the cylinder axis and the corresponding displacement of the subframe, said computer performing said calculation on basis of the instantaneous value of the actual position of the subframe for all degrees of freedom.

Clearly, the computer may form part of the central control assembly, since in this assembly or relevant instantaneous values are at any instant available.

It will be clear that the computer should perform a matrix-transformation transforming the relevant mechanical cylinder-data into the corresponding data regarding the effective motion of the subframe in all degrees of freedom. Such matrix-transformation would, on first side appear to be a disadvantage of this embodiment. It should, however, be noted that the computer software can basically be identical for every movement simulator and should only be adapted on basis of the actual mechanical parameters of the simulator involved, such as the above briefly mentioned mechanical parameters and the effective degrees of freedom. The software, therefore needs only be made once and can readily be accommodated to the actual situation. Complicated alignment-procedures are no longer required.

The invention will now be explained with reference to the accompaning drawing. Also reference is made to applicants' previous European patent application EP-B-0 051 896, in which per se known further details of movement-simulators of the present type are mentioned.

In the drawing:

figure 1 is a schematic perspective view of a movement-simulator;

figure 2 is a strongly simplified control diagram according to the prior art;

figure 3 is a schematic diagram corresponding to figure 2 of a control system according to the invention;

figure 4 is a control system according to the invention in a further embodiment;

figure 5 is a control system according to the invention in a preferred embodiment; and

figure 6 is a control system according to the invention in a further alternative embodiment.

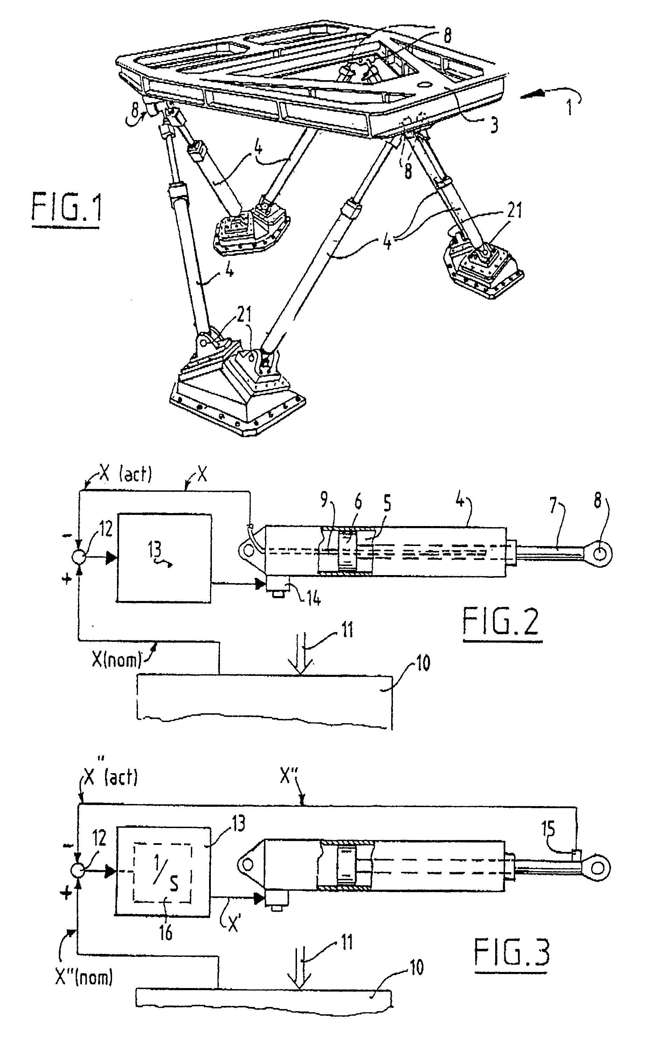

Figure 1 shows a movement-simulator. This movement-simulator comprises a frame 2 placed in the floor, and a subframe 3 movable relative to that frame 2, on which subframe e.g. a cockpit with a seat for a user may be fixed. The subframe 3 is movably carried by the frame 3 by means of six hydraulic cilinders, which all for the sake of convenience are referred to with the numeral 4. These hydraulic cylinders are connected with a non-shown central control assembly and a hydraulic system, by means of which the lengths of the hydraulic cylinders can be varied at will, e.g. under program control from a computer.

Figure 2 shows the control system, in which a hydraulic cylinder 4 is arranged. The hydraulic cylinder 4 comprises a cylinder house 5 and a plunger 7 connected with a piston 6. The variation in length of the hydraulic cylinder 4 is defined as the position difference between the cylinder house 5 and plunger 7, e.g. the end 8 thereof hingeably connected with said subframe 3. A linear position-transducer 9 supplies a position x. As a position-transducer a "linear variable differential transformer" or LVDT may be used. For larger displacements, however, an LVDT is no longer exactly linear. In that case preferably a "temposonic" transducer or other fully linear transducer may be applied.

The mentioned position signal x corresponds with the measured or actual position and will therefore from now on be referred to as x(act).

A computer 10 calculates on basis of input data 11, data present in a memory and the control programm previously loaded into the computer, a desired or nominal position.

In figure 2 the related output signal of the computer is indicated with x(nom). A difference circuit 12 determines the difference between x-(nom) and x(act) and supplies the difference signal to a control assembly 13 supplying a control signal to a control valve 14 controlling the feeding and outlet of oil under pressure to and from cilinder 4. With a fixed x(nom) on this way by means of the described control system a negative-feedback action takes place eliminating gradually the difference between x(nom) and x(act), until both positions equal each other.

Figure 3 shows a similar schematic diagram as in figure 2, in which, however, use is made of an acceleration transducer 15 supplying an acceleration signal x''. This corresponds with the measured or actual acceleration. In accordance with figure 2 in this connection the references x''(act) and x''-

(nom) are introduced. The reference x'' means a double differentiation of the position with time. The reference x' that will follow hereinafter means a single differentiation of the position with time.

As is indicated in figure 3 with interrupted lines, the control assembly 13 comprises an integrator 16 indicated with 1/s. In this case the signal to be supplied to the control valve corresponds no longer with an acceleration but rather with a velocity and is therefore indicated with x'.

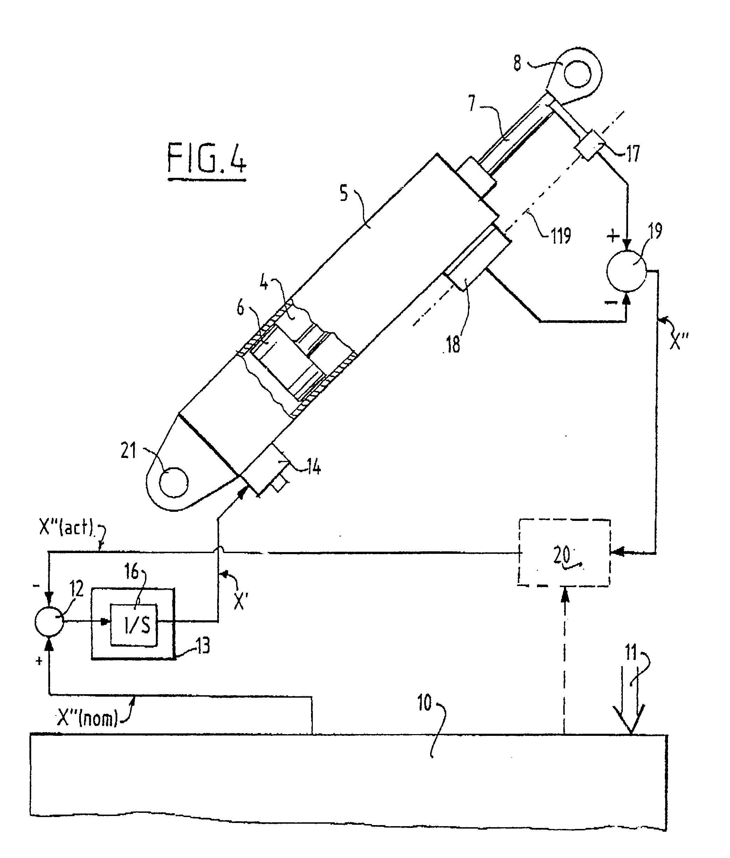

Figure 4 shows an embodiment, in which the acceleration transducer 15 is replaced by two acceleration transducers 17, 18, arranged at the plunger 7 and the cylinder house 5 respectively. As indicated with a stripe-dot-line 19, the acceleration transducers 17, 18 are exactly aligned. The output signals of transducers 17, 18 are supplied to a difference circuit 19, the output signal of which is as x(act) supplied to the inverting input of difference circuit 12. Dot-lines indicate a correction-circuit 20 controlled by computer 10 and serving the compensation for the difference in centrifugal accelerations of transducers 17 and 18, which namely have different arms relative to the hinging point 21 with frame 2.

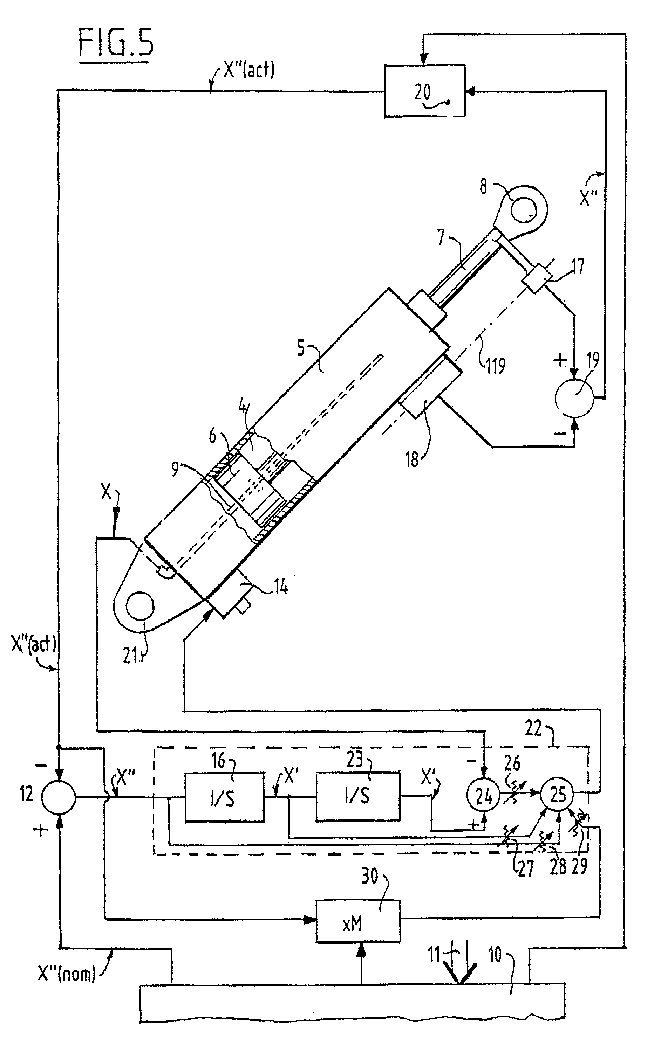

Figure 5 shows an embodiment, in which for a major part the same control system is used as shown in figure 4.

The embodiment according to figure 5, however, comprises a control assembly 22 indicated with an interrupted frame, and comprising a first integrator 16, a second integrator 23, a difference circuit 24 and a summing circuit 25. The output signal x' of the first integrator 16 is supplied to the second integrator 23. The output signal x thereof is supplied to the non-inverting input of difference circuit 24. To the inverting input thereof output signal x of position transducer 9 is supplied. The output signal of the difference circuit 24 is through an adjustable attenuator 26 supplied to the summing circuit 25 as a position-error signal. The output signal x' of the first integrator 16 is through an attenuator 27 supplied to summing circuit 25 as a velocity signal. The output signal x'' of the difference circuit 12 is through an adjustable attenuator 28 supplied to the summing circuit 25 as an acceleration signal.

The output signal x(act) of the correction-circuit 20 is also supplied to a multiplier 30, multiplying the related acceleration signal with a value of the actual effective mass calculated by computer 10 and supplies the related product-signal, therefore a force-signal through an attenuator 29 to the summing circuit 25.

The output signal of this summing circuit 25 is as a control signal supplied to the control valve 14.

It should be noted that in the figures the hydraulic system supplying the energy for the displacement of the piston 6 of the hydraulic cylinders 4, is not shown. This, however, is generally known technique.

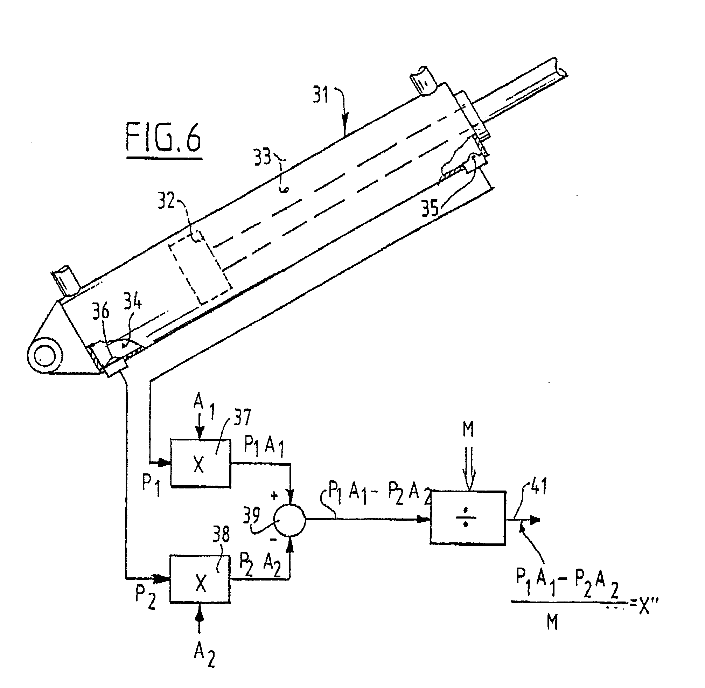

Figure 6 shows schematically a hydraulic cylinder 31, in which the piston 32 separates a cylinder in two compartments, 33, 34 respectively. In those respective compartments pressure transducers 35, 36 are arranged generating pressure signals P1, P2, respectively, representative of the hydraulic pressures prevailing in the respective compartments 33, 34. These pressure signals are fed into multiplying means, 37, 38, respectively, in which they are multiplied with A1 and A2, respectively representing the effective piston areas at the sides of the respective compartments 33, 34. The output signals of multi-pliers 37, 38 are subtracted in subtractor 39, the output of which is fed into a divider 40 dividing the output of subtractor 39 by M, which is the value of the mass present at the end of the cylinder carrying the subframe. Thus, the output 41 provides the acceleration signal x''. This signal x'' can further be processed and used for control as described hereinbefore.

Since the value M is not a constant it can be preferably be calculated by a computer previously fed with relevant parameters, such as the mass distribution of the subframe, the effective rest length of the cylinder, the rest angle between the cylinder axis and the corresponding displacement of the subframe, etc. The computer performs such calculation on basis of the instantaneous value of the position of the subframe for all degrees of freedom, translation as well as rotation.

## Claims

1. Movement-simulator, comprising:

a frame to be immovably positioned, e.g. to be placed on the floor;

a subframe movable relative to said frame, e.g. for carrying a control unit and a seat for a user;

at least one variable element having a controllable length, such as a hydraulic cylinder, said element being coupled with said frame and carrying said subframe;

a central control assembly connected with the or each variable element for controlling the length thereof; and

a transducer assembly for at least one parameter representative for the mechanical condition of said variable element, said transducer assembly supplying its output signals representative for the actual value of the related parameter to the central control assembly for comparison thereof with the instantaneous nominal value of the related parameter and adjusting the variable element until the actual value and the nominal value of the parameter substantially equal each other;

characterized in that

the transducer assembly comprises an acceleration transducer supplying an acceleration signal representative for the acceleration of the end of the variable element connected with said subframe.

2. Movement-simulator according to claim 1, in which the or each variable element can take a variable position in space dependent upon the actual mechanical condition,

characterized in that

the acceleration transducer comprises two transducers, the first of which is arranged at the end of the variable element connected with said subframe and the second is arranged in the same position in space as, and particularly aligned with said first transducer and is arranged at the end of the variable element connected with said frame, the output signals of said two transducers being subtracted from each other for forming the acceleration signal.

3. Movement-simulator according to claim 2, characterized in that the two transducers are arranged in substantially the same place.

4. Movement-simulator according to claim 2, characterized in that the two transducers are placed on different positions and that the central control assembly calculates the acceleration signal on basis of the measured or calculated mechanical condition, e.g. the position in space, of the variable element.

5. Movement-simulator according to claim 1, characterized by a first integrator, the input of which receives the acceleration signal and the output of which supplies a velocity signal serving as a control signal for the variable element.

6. Movement-simulator according to claim 5, characterized by a second integrator, the input of which receives the velocity signal and the output of which supplies a position signal serving as a control signal for the variable element.

7. Movement-simulator according to claims 1, 5 and 6, characterized by a summing circuit subjecting the acceleration signal, the velocity signal, and the position signal each individually to a previous chosen or adjustable amplification or attenuation and subsequently sums those signals, the output signal of said summing circuit serving as a control signal for the variable element.

8. Movement-simulator according to claim 1, in which the variable element is a hydraulic or pneumatic cylinder in which a piston is slidably arranged separating the cylinder in two compartments,

characterized in that

the acceleration transducer comprises:

two pressure transducers generating pressure signals ($P_1$, $P_2$) representative of the pressures prevailing in the two respective compartments,

multiplying means multiplying said pressure signals ($P_1$, $P_2$) with the respective effective piston areas ($A_1$, $A_2$ for generating respective force signals ($P_1 A_1$, $P_2 A_2$),

subtracting means subtracting said force signals for generating an effective force signal ($P_1 A_1 - P_2 A_2$), and

dividing means dividing said effective force signal by the effective mass present at the end of the cylinder carrying said subframe, for generating an effective acceleration signal

$$\frac{(P_1 A_1 - P_2 A_2)}{M}$$

which signal is the output signal of the acceleration transducer.

9. Movement-simulator according to claim 8, characterized in that the effective mass is calculated by a computer previously fed with relevant parameters, such as mass (distribution) of the subframe, (rest) length of the cylinder, (rest) angle between the cylinder axis and the corresponding displacement of the subframe, said computer performing said calculation on basis of the instantaneous value of the actual position of the subframe for all degrees of freedom.

FIG.1

FIG.2

FIG.3

FIG.4

# FIG.5

FIG.6

European
Patent Office

**EUROPEAN SEARCH
REPORT**

Application Number

**EP 91 10 3499**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 503 573 (MTS SYSTEMS CORP.)<br>* page 2, line 6 - page 3, line 8; page 5, line 1 - page 11, line 18; figures 1-3 *<br>– – – | 1,5-9 | G 09 B 9/08<br>G 05 D 3/14<br>F 15 B 9/03 |
| X | EP-A-0 249 559 (BERTIN & CIE)<br>* column 1, line 24 - column 3, line 30; column 3, line 53 - column 4, line 9; column 4, lines 17-33; column 4, line 58 -column 6, line 33; figure 1; claims 5-9,12,14 *<br>– – – | 1,5 | |
| A | EP-A-0 012 064 (LE MATERIEL TELEPHONIQUE)<br>* abstract; page 5, lines 20-31; figure 5; page 6, lines 18-31 *<br>– – – | 8 | |
| A | GB-A-1 545 860 (REDIFON FLIGHT SIMULATION LTD.)<br>* page 3, line 31 - page 5, line 31; figures 1-3 *<br>– – – | 1,8 | |
| A | US-A-4 089 494 (ANDERSON et al.)<br>– – – | | |
| A | EP-A-0 055 078 (CAE ELECTRONICS LTD.)<br>* abstract; page 7, line 31 - page 11, line 11; figure 2 *<br>– – – – – | 1 | |

|  |
|---|
| **TECHNICAL FIELDS SEARCHED (Int. Cl.5)** |
| G 09 B 9/00<br>G 05 D 3/00<br>F 15 B 9/00 |

The present search report has been drawn up for all claims

| Place of search | Date of completion of search | Examiner |
|---|---|---|
| Berlin | 29 June 91 | BEITNER M.J.J.B. |

CATEGORY OF CITED DOCUMENTS
X: particularly relevant if taken alone
Y: particularly relevant if combined with another
document of the same catagory
A: technological background
O: non-written disclosure
P: intermediate document
T: theory or principle underlying the invention

E: earlier patent document, but published on, or after
the filing date
D: document cited in the application
L: document cited for other reasons

&: member of the same patent family, corresponding
document